# FASCICULE DE BREVET EUROPEEN

(11) **EP 1 042 139 B1**
(45) Date de publication et mention de la délivrance du brevet: **10.08.2005**
(21) Numéro de dépôt: 98962506.6
(22) Date de dépôt: 18.12.1998
(51) Int. Cl.: B60N 2/42

(54) **DISPOSITIF D'ANTISOUMARINAGE DEPLOYABLE D'UNE POSITION INACTIVE VERS UNE POSITION ACTIVE**
AUS EINER INAKTIVEN IN EINE AKTIVE STELLUNG VERSETZBARE VORRICHTUNG ZUR VERHINDERUNG DES ABTAUCHENS
ANTISUBMARINING DEVICE CAPABLE OF BEING UNFOLDED FROM AN INOPERATIVE TO AN OPERATIVE POSITION

(30) Priorité: 31.12.1997 FR 9716810
(43) Date de publication de la demande: 11.10.2000
(73) Titulaire: Renault s.a.s., 92100 Boulogne Billancourt (FR)
(72) Inventeur: LALLEMENT, Stéphane, F-28130 Pierres (FR); LAPORTE, Alain, F-78280 Guyancourt (FR); LECROSNIER, Laurent, F-78280 Guyancourt (FR); OUDENARD, Laurent, F-92500 Rueil Malmaison (FR)
(86) Numéro de dépôt international: PCT/FR1998/002778
(87) Numéro de publication internationale: WO 1999/035000

(56) Documents cités:
- DE-A- 3 631 881
- DE-A- 3 841 688
- FR-A- 2 716 423
- FR-A- 2 747 080
- US-A- 4 154 472
- US-A- 5 125 472
- US-A- 5 340 185
- PATENT ABSTRACTS OF JAPAN vol. 007, no. 141 (M-223), 21 juin 1983 & JP 58 053525 A (TOYO KOGYO KK), 30 mars 1983

## Description

L'invention concerne un dispositif d'antisoumarinage déployable d'une position inactive vers une position active lors d'une collision du véhicule automobile contre un obstacle, et plus particulièrement appliqué à une assise de siège recevant un passager retenu par une ceinture de sécurité comportant un brin ventral seul ou un brin thoracique et un brin ventral.

Afin d'éviter au passager d'un véhicule automobile de glisser sous le brin ventral d'une ceinture de sécurité, lors d'une collision dudit véhicule contre un obstacle, et de créer des lésions ventrales importantes liées au déplacement relatif du passager par rapport à ladite sangle ventrale, il est utilisé des dispositifs d'antisoumarinage. En général les dispositifs d'antisoumarinage sont réalisés par l'intermédiaire d'un bossage rigide formé dans un support de l'assise du siège, en particulier aux places arrière, ou dans la structure même de ladite assise par adjonction d'une traverse. Un tel bossage entraîne une zone d'inconfort sur l'assise du siège. Il est remédié à cette zone d'inconfort par l'augmentation de l'épaisseur de mousse. Cette augmentation de l'épaisseur de mousse diminue l'efficacité du dispositif d'antisoumarinage.

La publication DE-A-38 41 688 décrit un dispositif d'antisoumarinage constitué d'une barre montée à pivotement autour d'un axe fixe, par rapport à la structure du siège. La barre se déplace d'une position inactive vers une position active par l'intermédiaire d'une came commandée par un dispositif pyrotechnique relié à ladite came par un câble.

Pour remédier à cet inconvénient il a été proposé des dispositifs antisoumarinage déployables d'une position inactive vers une position active. La publication FR-A-2 641 244 décrit un dispositif d'antisoumarinage déployable lors d'une collision du véhicule contre un obstacle, par l'intermédiaire d'un câble relié à un point d'accrochage de la ceinture de sécurité. Lors de la collision, le passager ceinturé est projeté vers l'avant du véhicule, dans le cas d'un choc avant, entraînant une tension sur le brin thoracique de la ceinture de sécurité. La tension dans la sangle thoracique se répercute sur le câble de liaison avec le dispositif d'antisoumarinage, déployant ainsi ce dernier vers une position active.

Un tel dispositif est dépendant de l'effort appliqué sur la sangle thoracique de la ceinture de sécurité et donc du positionnement de cette dernière sur le passager et de la masse de celui-ci. Le dispositif antisoumarinage étant constitué d'une plaque montée à pivotement autour d'un axe fixe, le bourrelet de retenue formé par la plaque se positionne toujours au même endroit, pendant la phase de retenue, quel que soit la morphologie du passager à retenir. De ce fait le bourrelet de retenue ne correspond pas à une position optimale d'antisoumarinage. La réalisation complexe d'un tel dispositif est de conception trop onéreuse.

Afin de pallier ces inconvénients l'invention a pour objet, un dispositif d'antisoumarinage déployable de mise en oeuvre simple et de réalisation peu coûteuse.

L'invention a également pour objet un dispositif d'antisoumarinage pouvant être facilement intégré sous un siège sans modifier le confort et sans augmenter l'épaisseur de mousse de l'assise.

L'invention a également pour objet un dispositif d'antisoumarinage qui s'adapte automatiquement à une position optimale de retenue.

Selon une caractéristique de l'invention, le dispositif d'antisoumarinage est constitué d'une barre libre longitudinalement, transversalement disposée sous l'assise, relié à des éléments latéraux de la structure du siège par l'intermédiaire d'un câble pourvu d'un moyen de tension, dudit câble, commandé par une variation de l'accélération du véhicule automobile.

Selon une autre caractéristique de l'invention, le câble est monté à translation dans la barre de forme tubulaire et dans au moins un des éléments latéraux de la structure.

Selon une autre caractéristique de l' invention, le moyen de tension est relié à au moins une extrémité libre du câble.

Selon une autre caractéristique de l'invention, la barre supporte le moyen de tension du câble.

Selon une autre caractéristique de l'invention, le moyen de tension est intégré dans la barre.

Selon une autre caractéristique de l'invention, la barre coopère avec un dispositif d'absorption d'une partie de l'énergie cinétique du passager.

Selon une autre caractéristique de l'invention, le dispositif d'absorption de l'énergie cinétique est couplé au moyen de tension du câble.

Selon une autre caractéristique de l' invention, le moyen de tension est un dispositif pyrotechnique.

Selon une autre caractéristique de l'invention, des éléments de guidage maintiennent la barre en position inactive.

D'autres caractéristiques et avantages de l'invention apparaîtront à la lecture de la description d'exemples de réalisation d'un dispositif d'antisoumarinage déployable au dessin annexé dans lequel :
- La figure 1 représente un schéma du dispositif d'antisoumarinage en position inactif selon l'invention.
- La figure 2 représente un schéma du dispositif d'antisoumarinage en position actif selon l'invention.
- La figure 3 représente un schéma du dispositif d'antisoumarinage selon un autre exemple de réalisation, en position inactif.
- La figure 4 représente un schéma du dispositif d'antisoumarinage selon un autre exemple de réalisation, en position actif.

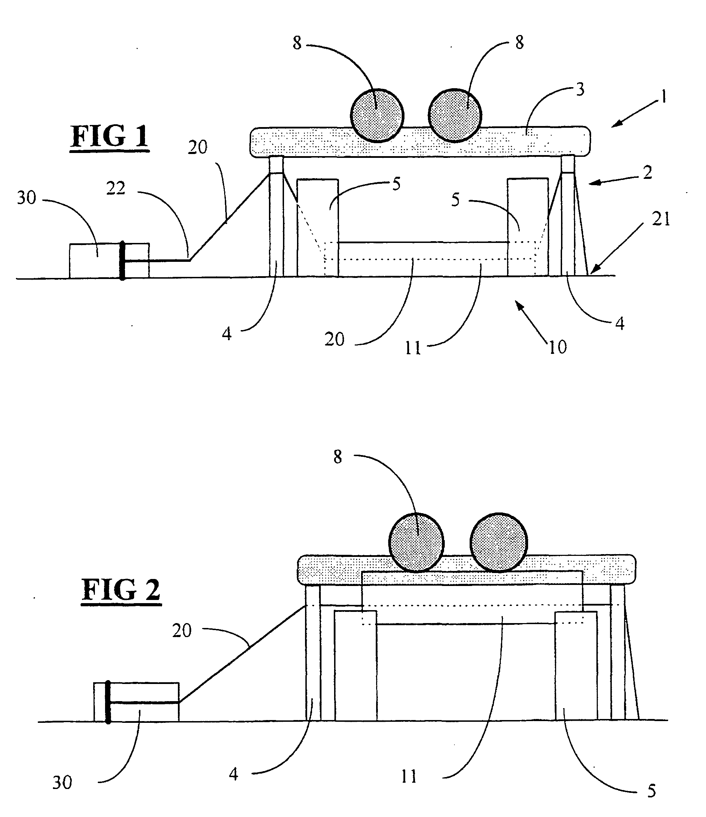

Tel que représenté à la figure 1, le siège 1 comporte une structure de soubassement 2 qui supporte au moins un élément d'assise 3. La structure de soubassement 2 dispose au moins d'éléments latéraux 4 verticalement orientés de part et d'autre de l'élément d'assise 3.

Le dispositif d'antisoumarinage 10 est constitué d'au moins une barre 11 libre, disposée transversalement sous l'élément d'assise 3. Dans l'exemple de réalisation représenté aux figures 1 à 2, la barre 11, de forme tubulaire, est traversée par un câble 20, dans sa partie creuse. Le câble 20 est guidé de part et d'autre de la barre 11 par des orifices réalisés dans les éléments latéraux 4. Ces orifices sont localisés verticalement à une position qui correspond à la hauteur maximale pouvant être atteinte par la barre 11 dans sa position active, tel que représenté à la figure 2. Le câble 20 est lié par une de ses extrémités 21 à un élément de structure fixe, du plancher ou du siège, et par l'extrémité libre 22 à un moyen de tension 30 du câble 20.

A titre d'exemple, le moyen de tension 30 du câble 20 peut être un actionneur pyrotechnique tel qu'utilisé pour les ceintures de sécurité. Le moyen de tension 30 du câble 20 peut être localisé sur le côté du siège 1 tel que représenté sur les figures 1 à 4 ou sous l'assise 3 par l'adjonction d'un renvoi de câble.

Il est également possible de prévoir le moyen de tension 30 du câble 20 intégré dans la barre 11. Dans ce cas le câble 20 est scindé en deux éléments reliés chacun à une extrémité opposée du moyen de tension 30 du câble 20, leurs extrémités libres étant liées à des éléments fixes de structure.

La barre 11 est maintenue en position inactive par l'intermédiaire de deux éléments de guidage 5 disposés sensiblement au niveau des extrémités de ladite barre 11, qui en autorisent le déplacement vertical ainsi qu'une liberté longitudinale permettant un positionnement optimal lors de la mise en position active de ladite barre 11. Afin d'éviter le risque de bruit parasite lors de l'utilisation du véhicule, les éléments de guidage 5 peuvent être conformés de manière à exercer une légère pression sur la barre 11 et limiter ainsi les vibrations en position inactive de ladite barre 11.

Les éléments de guidages 5 peuvent également disposer de parties (non représentées) limitant les déplacements latéraux de la barre 11, dans le cas d'une solution équipée d'une barre 11 de forme tubulaire dans laquelle translate le câble 20, lors de la tension de ce dernier.

Afin de limiter les contraintes sur le passager lors de la phase de retenue, le dispositif d'antisoumarinage 10 peut être couplé à un moyen d'absorption d'une partie de l'énergie cinétique dudit passager. Cette absorption peut être réalisée, par exemple, par l'intermédiaire de la déformation des éléments de guidage 5 ou par le montage, en série avec le moyen de tension 30 et le câble 20, d'un élément déformable (non représenté).

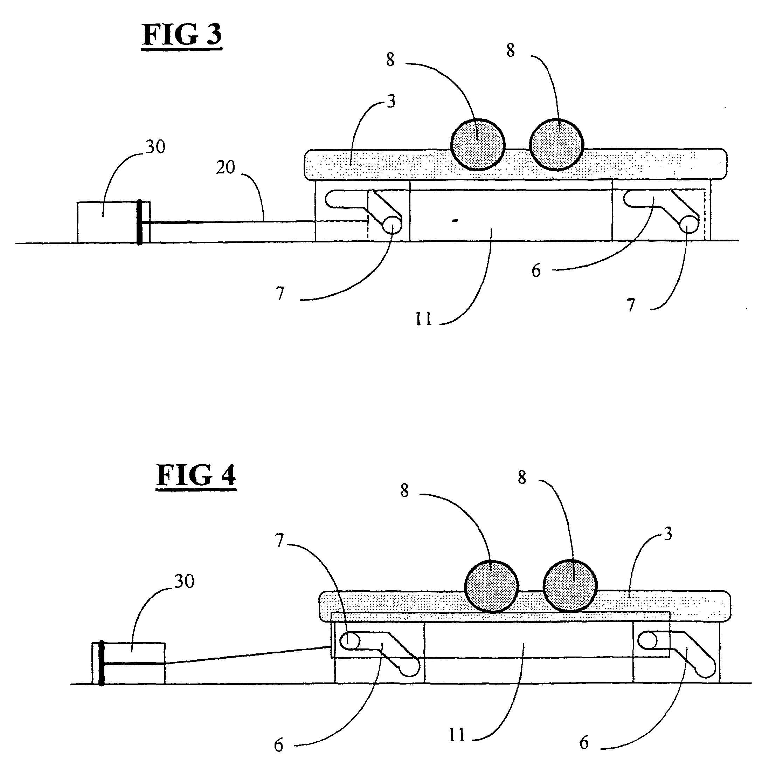

Tel que représenté aux figures 3 et 4 qui ne sont pas en accord avec l'invention, le guidage de la barre 11 dans son déplacement peut être réalisé par l'intermédiaire de lumières 6 recevant des axes 7 portés par la barre 11. Cette configuration doit comporter suffisament de jeu afin de permettre une mise en position active optimale.

Les lumières 6 sont réalisées de manière à former une rampe ascendante prolongée par un palier. Il peut être réalisé une encoche permettant le maintien de la barre 11 en position haute, sous l'action de l'effort engendré par la retenue du passager. L'encoche peut être réalisé de manière à favoriser le déchirement de la tôle des éléments de guidage afin d'absorber une partie de l'énergie cinétique du passager.

Lorsque le véhicule rencontre un obstacle et si le niveau de variation de l'accélération est suffisamment important par rapport à l'étalonnage des capteurs de déclenchement des dispositifs de sécurité, le dispositif de tension du câble 20 se met en action, afin de déployer le dispositif d'antisoumarinage de sa position inactive vers une position active. La tension exercée sur le câble 20 ainsi que sa translation provoque le déplacement vertical de la barre 11 qui vient se positionner contre l'assise 3 au niveau de la partie supérieure des cuisses 8 du passager. Sous l'effort, la barre 11 se place idéalement afin d'effectuer une retenue adaptée à la morphologie du passager.

## Revendications

1. Dispositif d'antisoumarinage déployable d'une position inactive vers une position active, équipant un siège (1) constitué d'au moins une assise (3) portée par une structure de soubassement (2), **caractérisé en ce qu'**il est constitué d'une barre (11) libre longitudinalement, transversalement disposée sous l'assise (3), relié à des éléments latéraux (4) de la structure (2) du siège (1) par l'intermédiaire d'un câble (20) pourvu d'un moyen de tension (30), dudit câble (20), commandé par une variation de l'accélération du véhicule automobile.

2. Dispositif d'antisoumarinage selon la revendication 1, **caractérisé en ce que** le câble (20) est monté à translation dans la barre (11) de forme tubulaire et dans au moins un des éléments latéraux (4) de la structure (2).

3. Dispositif d'antisoumarinage selon la revendication 2, **caractérisé en ce que** le moyen de tension (30) est relié à au moins une extrémité libre (22) du câble (20).

4. Dispositif d'antisoumarinage selon la revendication 1, **caractérisé en ce que** la barre (11) supporte le moyen de tension (30) du câble (20).

5. Dispositif d'antisoumarinage selon la revendication 4, **caractérisé en ce que** le moyen de tension (30) est intégré dans la barre (11).

6. Dispositif d'antisoumarinage selon l'une quelconque des revendications 1, 2, 4 et 5, **caractérisé en ce que** la barre (11) coopère avec un dispositif d'absorption d'une partie de l'énergie cinétique du passager.

7. Dispositif d'antisoumarinage selon la revendication 6, **caractérisé en ce que** le dispositif d'absorption de l'énergie cinétique est couplé au moyen de tension (30) du câble (20).

8. Dispositif d'antisoumarinage selon l'une quelconque des revendications 1, 3 à 5, 7, **caractérisé en ce** le moyen de tension (30) est un dispositif pyrotechnique.

9. Dispositif d'antisoumarinage selon l'une quelconque des revendications 1, 2, 4 et 5, **caractérisé en ce que** des éléments de guidage (5) maintiennent la barre (11) en position inactive.

## Patentansprüche

1. Vorrichtung zur Verhinderung eines Abtauchens, welche von einer inaktiven Stellung in Richtung zu einer aktiven Stellung ausfahrbar ist, die einen Sitz (1) ausstattet, welcher aus mindestens einem Sitzteil (3) gebildet ist, das durch eine Sockelstruktur (2) getragen wird, **dadurch gekennzeichnet, dass** sie aus einer longitudinal freien Stange (11) gebildet ist, welche transversal unter dem Sitzteil (3) angeordnet ist, welche mit seitlichen Elementen (4) der Struktur (2) des Sitzes (1) über ein Kabel (20) verbunden ist, das mit einem Spannmittel (30) des Kabels (20) versehen ist, das durch eine Veränderung der Beschleunigung des Kraftfahrzeuges gesteuert wird.

2. Vorrichtung zur Verhinderung eines Abtauchens nach Anspruch 1, **dadurch gekennzeichnet, dass** das Kabel (20) in Translation in der Stange (11) einer röhrenförmigen Form und in mindestens einem der seitlichen Elemente (4) der Struktur (2) montiert ist.

3. Vorrichtung zur Verhinderung eines Abtauchens nach Anspruch 2, **dadurch gekennzeichnet, dass** das Spannmittel (30) mit mindestens einem freien Ende (22) des Kabels (20) verbunden ist.

4. Vorrichtung zur Verhinderung eines Abtauchens nach Anspruch 1, **dadurch gekennzeichnet, dass** die Stange (11) das Spannmittel (30) des Kabels (20) trägt.

5. Vorrichtung zur Verhinderung eines Abtauchens nach Anspruch 4, **dadurch gekennzeichnet, dass** das Spannmittel (30) in der Stange (11) integriert ist.

6. Vorrichtung zur Verhinderung eines Abtauchens nach irgendeinem der Ansprüche 1, 2, 4 und 5, **dadurch gekennzeichnet, dass** die Stange (11) mit einer Vorrichtung zur Absorption eines Teils der kinetischen Energie des Insassens zusammenwirkt.

7. Vorrichtung zur Verhinderung eines Abtauchens nach Anspruch 6, **dadurch gekennzeichnet, dass** die Vorrichtung zur Absorption von kinetischer Energie mit dem Spannmittel (30) des Kabels (20) gekoppelt ist.

8. Vorrichtung zur Verhinderung eines Abtauchens nach irgendeinem der Ansprüche 1, 3 bis 5, 7, **dadurch gekennzeichnet, dass** das Spannmittel (30) eine pyrotechnische Vorrichtung ist.

9. Vorrichtung zur Verhinderung eines Abtauchens nach irgendeinem der Ansprüche 1, 2, 4 und 5, **dadurch gekennzeichnet, dass** Führungselemente (5) die Stange (11) in inaktiver Stellung halten.

## Claims

1. An anti-submarining device that can be deployed from an inactive position to an active position, equipping a seat (1) formed by at least one seating member (3) borne by a substructure (2), **characterised in that** it is formed by a longitudinally free bar (11), disposed transversely below the seating portion (3), connected to lateral members (4) of the structure (2) of the seat (1) by means of a cable (20) provided with a tensioning means (30) for the cable (20) controlled by a variation of the acceleration of the automobile vehicle.

2. An anti-submarining device as claimed in claim 1, **characterised in that** the cable (20) is mounted in translation in the bar (11) of tubular shape and in at least one of the lateral members (4) of the structure (2).

3. An anti-submarining device as claimed in claim 2, **characterised in that** the tensioning means (30) is connected to at least one free end (22) of the cable (20).

4. An anti-submarining device as claimed in claim 1, **characterised in that** the bar (11) bears the tensioning means (30) of the cable (20).

5. An anti-submarining device as claimed in claim 4, **characterised in that** the tensioning means (30) is incorporated in the bar (11).

6. An anti-submarining device as claimed in any one of claims 1, 2, 4 and 5, **characterised in that** the bar (11) cooperates with a device absorbing part of the kinetic energy of the passenger.

7. An anti-submarining device as claimed in claim 6, **characterised in that** the kinetic energy absorption device is coupled to the tensioning means (30) of the cable (20).

8. An anti-submarining device as claimed in any one of claims 1, 3 to 5 and 7, **characterised in that** the tensioning means (30) is a pyrotechnic device.

9. An anti-submarining device as claimed in any one of claims 1, 2, 4 and 5, **characterised in that** guide means (5) retain the bar (11) in the inactive position.
